# EUROPEAN PATENT APPLICATION

(11) **EP 4 538 237 A1**
(43) Date of publication of application: **16.04.2025**
(21) Application number: 23203490.0
(22) Date of filing: 13.10.2023
(51) Int. Cl.: C02F 1/32, B65D 1/02

(54) **SOLAR WATER DISINFECTION**

(71) Applicant: 4Life Solutions ApS, 2100 København Ø (DK)
(72) Inventor: LØCKE, Alexander, 2100 København Ø (DK)
(74) Representative: Zacco Denmark A/S

(57) **Abstract**

A collapsible plastic container for solar water disinfection (100) having a stiffness to enable it to shift between a voluminous filled state and a collapsed empty state, said container having an opening (110) for receiving water to be disinfected where said opening (110) can subsequently be closed and reopened, said container having a handle (160) and two opposing surfaces (120, 130) being substantially flat and having bends (140) which are connected by a flexible welding (150) such that the plastic container is collapsible, and said container being made substantially of photostabilized LDPE plastic material being sufficiently stable to UV radiation to enable the container to have an outdoor in-use period corresponding to a Kly of at least 100 GJ/m².

## Description

### Technical field of the invention

The present invention relates to the field of drinking water, specifically to the field of disinfection of water.

### Background of the invention

Access to safe, potable water is widely recognized as a basic human right through a number of international treaties, providing a non-binding interpretation that access to water entitles every human to sufficient, safe, acceptable, physically accessible and affordable water for personal and domestic uses. Specifically, and as set forth by the World Health Organization, this basic access to water requires availability of a fresh water source that is at most 1000 meters or 20 minutes away and which affords the possibility of reliably obtaining at least 20 liters per day per family member.

A closely related basic human right is the access to hygienic sanitation, since the lack of sanitation near fresh water bodies reduces the quality of water downstream. However, in the past decade experts at the United Nations have expressed concern that absence of clean water or sanitation still exacts a human toll for almost a billion people suffering from lack of access to improved water sources, particularly with an estimated 1.5 million children under the age of five dying each year and 443 million school days lost because of water- and sanitation-related diseases.

The lack of proper water and sanitation infrastructure in developing countries makes providing safe drinking water to an entire population very challenging, especially in poor or sparsely populated areas. Centralization of drinking water supplies has the disadvantage of requiring the users to travel to and from remote dispensing stations, with some having to carry water many kilometers each day, and further increasing the risks of waterborne infectious diseases polluting the otherwise accessible water sources, thereby requiring additional infrastructure to treat the water before use. It is also evident that resorting to bottled water is not the solution, as it is cumbersome and expensive for the required amounts of water.

Ozores et al (Water Research, 186, 2020, 116387) assesses the use of 19 liters polycarbonate and 25 liters polyethylene terephthalate bottles for solar disinfection of water.

WO2021/148542 discloses a system for solar disinfection of water comprising a container and an electronic device indicating the status of the disinfection.

Garcia-Gil et al (Molecules, 26, 2021, 3431) reviews solar water disinfection and concludes on some of the factors limiting the use of solar disinfection, e.g. limited effectiveness of disinfection, cost restraints and the users overestimation of the required solar exposure time. WO 2021/018653 discloses water disinfection containers made up of fluoropolymer as the best choice for solar water disinfection.

Hence, there is a need for technical solutions for effectively guarding against waterborne infectious diseases in the drinking water supply, e.g. by offering cheap, safe, easy to use and decentralized alternatives.

### Summary of the invention

It is an object of the present invention to provide a container for solar water disinfection which has the properties of being practical for handling, effective for disinfection of water inside the container, stable for prolonged use under exposure to sunlight, compatible with contact to drinking water and importantly, being very cost effective.

In a first aspect the present invention provides a collapsible plastic container for solar water disinfection (100) having a stiffness to enable it to shift between a voluminous filled state and a collapsed empty state, said container having an opening (110) for receiving water to be disinfected where said opening (110) can subsequently be closed and reopened, said container having a handle (160) and two opposing surfaces (120, 130) being substantially flat and having bends (140) which are connected by a flexible welding (150) such that the plastic container is collapsible, and said container being made substantially of photostabilized LDPE plastic material being sufficiently stable to UV radiation to enable the container to have an outdoor in-use period corresponding to a Kly of at least 100 GJ/m².

In one embodiment the photostabilized LDPE plastic material comprises at least one antioxidant.

In a second aspect the present invention provides a use of the collapsible plastic container as defined above for solar disinfection of water.

In an embodiment the use of the plastic container as defined herein for solar water disinfection comprises filling said plastic container with water to be disinfected and placing said plastic container outdoor in the sun for at least 4 hours.

The present invention is further defined by the following items:
1. A collapsible plastic container for solar water disinfection (100) having a stiffness to enable it to shift between a voluminous filled state and a collapsed empty state, said container having an opening (110) for receiving water to be disinfected where said opening (110) can subsequently be closed and reopened, said container having a handle (160) and two opposing surfaces (120, 130) being substantially flat and having bends (140) which are connected by a flexible welding (150) such that the plastic container is collapsible, and said container being made substantially of photostabilized LDPE plastic material being sufficiently stable to UV radiation to enable the container to have an outdoor in-use period corresponding to a Kly of at least 100 GJ/m².
2. The collapsible plastic container according to item 2, wherein said photostabilized LDPE plastic material comprises at least one antioxidant.
3. The collapsible plastic container according to any one of the preceding items, wherein said photostabilized LDPE plastic material comprises a hindered amine light stabilizer (HALS).
4. The collapsible plastic container according to any one of the preceding items, having a box-like shape, e.g. having distinct substantially flat surfaces (120, 130) connected by bends (140) and welding (150), said bends (140) having a length of less than 15% of the length or width of any of said surfaces (120, 130).
5. The collapsible plastic container according to any of the preceding items, having two substantially flat opposing surfaces (120, 130), each of said two substantially flat opposing surfaces having an area of at least 20% of the total area of said plastic container.
6. The collapsible plastic container according to any of the preceding items, having a length (L) larger than the width (W), and said width (W) larger than the depth (D), wherein the width (W) to depth (D) ratio is at least 1.5, such as at least 2.0, such as in the range from 1.5 to 3.0, such as in the range from 2.0 to 2.6.
7. The collapsible plastic container according to any of the preceding items, having a length (L) larger than the width (W), and said width (W) larger than the depth (D), wherein the length (L) to width (W) ratio is in the range from 1.0 to 3.0, from 1.0 to 1.8, from 1.15 to 1.5, or from 1.2 to 1.4.
8. The collapsible plastic container according to any of items 6-8, having a depth (D) in the range from about 5cm to about 15cm, in the range from about 7cm to about 12cm, or about 9cm.
9. The collapsible plastic container according to any one of the previous items, which has a volume of about 1L to about 30L, from about 1L to about 20L, from about 2L to about 10L, from about 2L to about 8L, from about 4L to about 10L, from about 6L to about 25L, or from about 6L to about 15L.
10. The collapsible plastic container according to any of the preceding items, wherein one surface (120) is clear to incident sunlight, and the opposite surface (130) has a dark colour thus absorbing IR.
11. The collapsible plastic container according to any of the preceding items, wherein one surface (120) being LDPE without colour, the other surface (130) being LDPE with a dark colour such as black or blue.
12. The collapsible plastic container according to any one of the preceding items, wherein the opening (110) of the container is furnished with a screw cap, a tap or a dispenser.
13. The collapsible plastic container according to any of the preceding items, having at least 3 indentations on a first surface (130) spanning the length-width plane which matches the same number of protrusions (120) on an opposing surface (120) also spanning the height-width plane.
14. The collapsible plastic container according to any of the preceding items, configured with a label on the surface having the indentations indicating the surface upon which the container rests while the surface with the protrusions face the sun during disinfection of the water.
15. The collapsible plastic container according to any one of the preceding items, wherein said container has an average thickness of the LDPE plastic material in the range from about 0.5 mm to about 2.0 mm.
16. The collapsible plastic container according to any of the preceding items, which is manufactured by welding together two sheets of LDPE.
17. The collapsible plastic container according to item 16, wherein the two sheets of LDPE are vacuum formed.
18. The collapsible plastic container according to any of the preceding items, comprising an electronic device configured to receive incident light and to provide an indication of the disinfection status.
19. The collapsible plastic container according to any of the preceding claims, which has an outdoor in-use period corresponding to a Kly of at least 150 GJ/m² or a Kly of at least 180 GJ/m².
20. Use of the collapsible plastic container as defined in any of the preceding items for solar disinfection of water.
21. The use according to item 20, wherein the collapsible plastic container is placed in the sunlight with the surface (130) towards the ground.

### Brief description of the drawings

Figure 1. An embodiment of the collapsible plastic container for solar water disinfection depicted from different directions, upside view and downside view.
Figure 2. An embodiment of the collapsible plastic container for solar water disinfection depicted from top view and end view.
Figure 3. An embodiment of the collapsible plastic container where it is in a collapsed state, reducing the volume of the container. Collapsed plastic container depicted from different angles, upside view at the top, sideways view in the middle and end view at the bottom.

### Description

The present invention provides a collapsible plastic container for solar water disinfection (100) having a stiffness to enable it to shift between a voluminous filled state and a collapsed empty state, said container having an opening (110) for receiving water to be disinfected where said opening (110) can subsequently be closed and reopened, said container having a handle (160) and two opposing surfaces (120, 130) being substantially flat and having bends (140) which are connected by a flexible welding (150) such that the plastic container is collapsible, and said container being made substantially of photostabilized LDPE plastic material being sufficiently stable to UV radiation to enable the container to have an outdoor in-use period corresponding to a Kly of at least 100 GJ/m².

The disinfection of water borne pests includes the inactivation of bacteria, protozoa and viruses in the water. This may be achieved by UV radiation, in particular by UV-B radiation which penetrates the water wherein the water borne pests and pathogens may reside. It may also be achieved by heating the water such as to inactivate the water born pest and pathogens. Without wishing to be bound by theory it is believed that the solar driven disinfection of water using the collapsible container according to the present invention occurs by way of the combined effects of UV radiation and heating of the water inside the collapsible container.

The solar radiation energy is usually expressed in Kly (Kilolangley) units (GJ/m²). Plastic containers with a Kly value of 400 can resist the harmful effects of UV radiation for a minimum of about 4 to 5 years in normal sunny climate areas, and about 2 years in the most sunny parts of earth. The amount of Kly/year varies greatly dependent on the place on the globe. Some of the highest levels are near the equator with, for example, central parts of Africa having 200 Kly per year.

In another embodiment the photostabilized LDPE comprises at least 90% LDPE, at least 95% LDPE, at least 98% LDPE or at least 99% LDPE.

The opening (110) of the container may be furnished with a screw cap, a tap or a dispenser such that the container can be opened when filling water to be disinfected into the container (100), and when using the disinfected water from the container upon being disinfected by exposure to incident sunlight.

In a preferred embodiment the collapsible plastic container (100) is substantially made from photostabilized LDPE (Low Density PolyEthylene). LDPE is a type of polyethylene defined by a density range of approx 917-930 kg/m3. It is resistant to impact, moisture and offers good chemical resistance. This satisfies the object of being made from a very low cost material which is sufficiently transparent and allows UV radiation to penetrate into the contents, i.e. the water to be disinfected. Furthermore, LDPE has a sufficient toughness, tensile strength and stiffness for a plastic container which is to be used multiple times under rugged conditions.

In an embodiment the photostabilized LDPE comprises at least 90% LDPE, at least 95% LDPE, at least 98% LDPE or at least 99% LDPE.

However, as many plastics LDPE is poorly photostable, i.e. having a limited lifetime when exposed to sunlight. Therefore, the LDPE used for the collapsible containers according to the present invention are substantially made from photostabilized LDPE. Adding UV blockers is not desirable here since UV radiation must be transmitted through the container for the solar disinfection to be most effective. In an embodiment, the photostabilized LDPE in the collapsible plastic container therefore comprises at least one stabilizer.

In one embodiment the collapsible plastic container for solar water disinfection comprises at least one stabilizer comprising an antioxidant. Such an antioxidant is preferably classified as compatible with plastics for use in direct contact with drinking water. Non-limiting examples of antioxidants for plastics are Tetrakis (methylene-3-(3,5-di-tert-butyl-4-hydroxyphenyl-propionate)) methane) and distearyl thiodipropionate.

In another embodiment the collapsible plastic container for solar water disinfection contains at least one stabilizer comprising a hindered amine light stabilizer (HALS). HALS compounds are derivatives of 2,2,6,6-tetramethylpiperidine and contain an amine functional group that are used as stabilizers in plastics and polymers. HALS are efficient scavengers and function by inhibiting degradation of polymers that have already formed free radicals, they do not absorb UV radiation but act to inhibit degradation of the plastic. They slow down the photochemically initiated degradation reactions, to some extent in a similar way to antioxidants. The difference in mechanism between antioxidant and HALS is that HALS reaction is cyclic while antioxidant is not.

Other options for light stabilizer than HALS are benzophenones and benzotriazoles.

Without wishing to be bound by theory it is believed that the geometry of the collapsible plastic container for solar water disinfection is important for optimal performance. As the water used for disinfection may not be entirely clear, e.g. because of suspended impurities such as fine clay particles and organic matter, the plastic container preferably has at least one dimension where the depth through the container is no more than about 8-11 cm.

In an embodiment the plastic container for solar water disinfection has a box-like shape, e.g. having distinct substantially flat surfaces (120, 130) connected by bends (140), said bends having a length of less than 15% of the length or width of any of said surfaces.

In another embodiment the plastic container for solar water disinfection has two substantially flat opposing surfaces (120, 130), each of said two substantially flat opposing surfaces having an area of at least 20% of the total area of said plastic container.

In another embodiment the plastic container for solar water disinfection has a length (L) larger than the width (W), and said width (W) larger than the depth (D), wherein the width (W) to depth (D) ratio is at least 1.5, such as at least 2.0, such as in the range from 1.5 to 3.0, such as in the range from 2.0 to 2.6.

In another embodiment the collapsible plastic container for solar water disinfection has a length (L) larger than the width (W), and said width (W) larger than the depth (D), wherein the length (L) to width (W) ratio is in the range from 1.0 to 3.0, from 1.0 to 1.8, from 1.15 to 1.5, or from 1.2 to 1.4.

In another embodiment the collapsible plastic container for solar water disinfection has a depth (D) in the range from about 5cm to about 15cm, in the range from about 7cm to about 12cm, or about 9cm.

In another embodiment the collapsible plastic container for solar water disinfection has a volume of about 1L to about 30L, from about 1L to about 20L, from about 2L to about 10L, from about 2L to about 8L, from about 4L to about 10L, from about 6L to about 25L, or from about 6L to about 15L. In a preferred embodiment the collapsible plastic container for solar water disinfection has a volume in the range from about 4L to about 10L.

In another embodiment the collapsible plastic container for solar water disinfection has a visual path through the container having a length of from about 20 cm to about 24 cm for visual inspection of the water being clear enough for being suitable for solar disinfection, e.g. by looking from one end of said visual path towards a finger at the other end of said visual path.

For the practical use of the in the collapsible plastic container once it has been disinfected by exposure to incident sunlight it may be practical to have the container lying on a flat surface or hanging. Hence, in another embodiment the collapsible plastic container for solar water disinfection is configured for being able to be hanging on a hook or from a rope. This may be configured via the handle (160). In another embodiment the collapsible plastic container for solar water disinfection has a furnishing for hanging said container on a hook or from a rope. In yet another embodiment the collapsible plastic container for solar water disinfection has a furnishing for hanging said container on a hook or from a rope which is at an opposite face to the opening (110) of the container. Here it may be convenient that the opening is a tap which can be switched between open and closed positions.

In another embodiment the collapsible plastic container for solar water disinfection comprises one surface (120) being transparent to radiation, e.g. UV and IR, and the opposite surface (130) being reflective or absorptive to incident raditation, e.g. by the lower surface (130) being made of a dark coloured plastic material, e.g. dark coloured LDPE. During the disinfection of water it is intended that the collapsible plastic container rests on the surface (130) and the opposite surface (120) faces the incident sunlight whereby radiation entering through surface (120) and passes through the water inside the container is partially or fully absorbed or reflected by the downward surface (130).

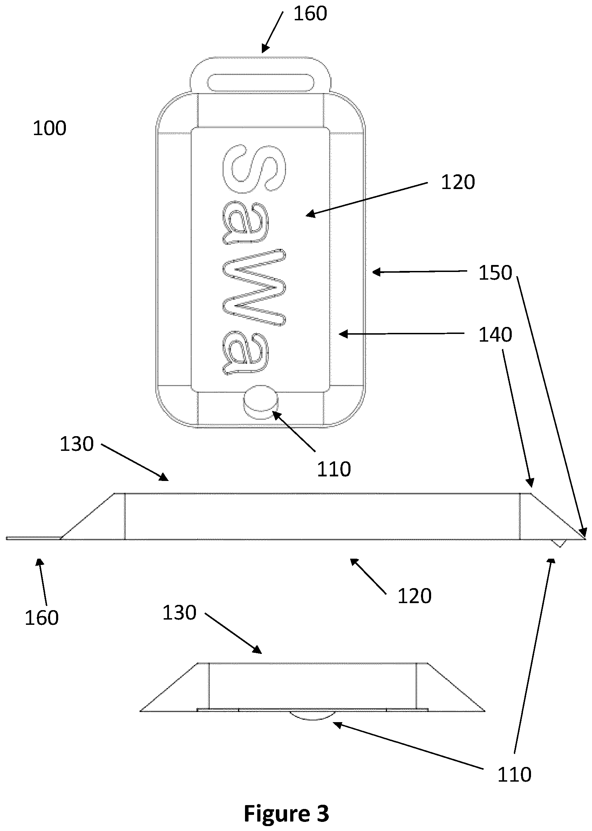

Transportation of the collapsible plastic containers for solar water disinfection may be done both as empty containers and as water-filled containers. In water filled state the collapsible plastic containers may be transported hanging in the handle or laying on one of the surfaces (120, 130). If lying on one of the surfaces, it is preferred the collapsible plastic container lies on the surface (130) intended to face downwards during disinfection. When transported in empty state the collapsible plastic container is preferably in the collapsed state where it has a reduced volume thus requires less space, see Figure 3.

The collapsible plastic container in some embodiments comprises at least three matching sets of indentations and protrusions which serves to facilitate the stacking of the water filled collapsible plastic containers during storage and transportation. It has also been found that the orientation of the matching indentations and protrusions may be selected such that the protrusions are at the surface intended to face the incident sunlight during disinfection as the surface with the protrusions has the better UV transmittance of the two opposing surfaces once the plastic container is reused and gets worn and scratched from transportation or laying on the ground or other surfaces, e.g. during transport between the water source, the place where disinfection takes place and the place where the disinfected water is used.

In an embodiment the collapsible plastic container for solar water disinfection has 4, 5 or 6 sets of matching protrusions/indentations.

In another embodiment the collapsible plastic container for solar water disinfection is configured with a label on the surface having the indentations indicating the surface upon which the container rests while the surface with the protrusions face the sun during disinfection of the water. In a further embodiment this label is reflective to UV light.

Collapsible plastic containers may be manufactured by several processes commonly used in the plastics manufacturing industry. In one embodiment the collapsible plastic container for solar water disinfection is manufactured by welding together two sheets of LDPE.

In another embodiment the plastic container for solar water disinfection is manufactured by welding together two sheets of LDPE which are vacuum formed.

As a consequence of the manufacturing process used for making the collapsible plastic containers, they may have a material thickness having some variation over the surface. Generally it is desirable to seek to obtain a uniform material thickness such that mechanical properties and UV transmittance is substantially the same over the whole surface of the collapsible plastic container. In an embodiment the collapsible plastic container for solar water disinfection comprises different parts of the surface of said container that has a LDPE material thickness in the range from about 0.3 mm to about 3.0 mm. In another embodiment the container has an average thickness of the LDPE material in the range from about 0.5 mm to about 2.0 mm. In yet another embodiment the container has a LDPE material thickness wherein the thickest area of 1 cm² has less than 5 times the thickness of the thinnest area of 1 cm².

The collapsible plastic container for solar water disinfection may further comprise an electronic device (190) configured to receive incident light and to provide an indication of the disinfection status. In an embodiment the electronic device comprises a photovoltaic component and a processor. The electronic device is placed in connection with the collapsible plastic container to receive incident sunlight, just as the remaining parts of the container. In another embodiment the electronic device further comprises a sensor for the temperature of the water inside the container.

In a further embodiment the collapsible plastic container for solar water disinfection comprises an electronic device additionally comprising a temperature sensor such that said processor determines the level of disinfection from the temperature and the dose of UV light transmitted through the container based on the photovoltaic output.

In another embodiment, a dose equivalent of UV light transmitted through at least part of the container being UV transparent may be determined based on the photovoltaic output indicative of a visible light intensity at the photovoltaic component using a predetermined constant of proportionality between the photovoltaic output and the corresponding dose equivalent of UV light. A constant of proportionality may for example be determined by calibration of the photovoltaic output against a reference measurement, such as a reference measurement obtained by a UV light intensity sensor, for example such as a UV light intensity calibration sensor, such as a UV light intensity sensor provided by a meteorological institute, atmospheric laboratory or the like.

The electronic device comprises the processor. The processor, being connected to the photovoltaic component and optionally the temperature sensor either through the electronic circuit or similar means of analogue or digital data exchange, is configured to receive the photovoltaic output and optionally the temperature signal, whereby a set of instructions can be provided which, when executed by the processor, allows the electronic device to determining the rate at which waterborne pathogens can be killed or made inactive inside the container during the treatment. Further, instead of or in addition to determining an instantaneous pathogen kill rate, the instructions may allow the processor to determine a water disinfection state by calculating a cumulative effect on the initial pathogen population in the water to be purified by numerical modelling. The water disinfection state may indicate the level of disinfection of the water in the container.

By configuring an electronic device to determine a water disinfection state, the water purification system may provide the advantage of making batch processing of multiple containers more feasible by relying on one or more containers with electronic devices to determine the water disinfection state and. e.g. provide an indication of the point in time when estimated 99.9% of pathogens have been killed in the water in each container. Examples of suitable electronic devices may be found in e.g. WO2021/148542.

In a further aspect the present invention provides the use of the collapsible plastic container as defined above for solar disinfection of water. In an embodiment the use of the collapsible plastic containers for solar disinfection of water comprises filling said plastic container with water to be purified and placing said collapsible plastic container outdoor in the sun for at least 4 hours or until said electronic device indicates that the water has been disinfected.

The filled containers are preferably placed on a support surface receiving incident sunlight, preferably such that the orientation of the container towards the sun exposes a maximal surface area to the incident sunlight. In particular, the container may be positioned on the support surface such that at least the UV transparent part of the container is exposed to the incident sunlight.

The incident UV light may provide that the water inside the filled container receives an accumulating dose of UV light through the UV-transparent part of the container. Exposing the water to be disinfection to UV light while inside the container is advantageous because waterborne pathogens can be killed or made inactive while preventing recontamination.

Placing the filled container in incident sunlight may further provide a heating effect on the water to be disinfected, which provides an elevated water temperature relative to the ambient temperature of the environment. Further, the heating effect may assist in ensuring a uniform reduction of the pathogen population by promoting convection in the water as warmer water rises and cooler water descends, effectively mixing the water inside the container. The mixing effect may provide the advantage that no part of the water is left untreated. Particularly, this mixing is also advantageous if the water is turbid.

In a further embodiment the use of the collapsible plastic container for solar water disinfection comprises the steps of filling said plastic container with water to be disinfected and placing said plastic container outdoor in the sun for at least 4 hours or until said electronic device indicates that the water has been disinfected.

### Description of Examples

Various examples are described hereinafter with reference to the figures. Like reference numerals refer to like elements throughout. Thus, like elements will not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

The present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The spatially relative terms "lower" or "bottom" and "upper" or "top", "below", "beneath", "less", "above", and the like, may be used herein for ease of description to describe the relationship between one element or component and another element or component as illustrated in the drawings. It will be understood that the spatially relative terms are intended to encompass different orientations of the device in use or operation, in addition to the orientation depicted in the drawings.

For example, in the case where a container illustrated in the drawings is turned over, elements described as being on the "lower" side of other elements, or "below" or "beneath" another element would then be oriented on "upper" sides of the other elements, or "above" another element. Accordingly, the illustrative term "below" or "beneath" may include both the "lower" and "upper" orientation positions, depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below, and thus the spatially relative terms may be interpreted differently depending on the orientations described.

Throughout the specification, when an element is referred to as being "connected" to another element, the element is "directly connected" to the other element, or "electrically connected" to the other element with one or more intervening elements interposed there between.

The terminology used herein is for the purpose of describing particular examples only and is not intended to be limiting. As used herein, the singular forms "a," "an," and "the" are intended to include the plural forms, including "at least one," unless the content clearly indicates otherwise. "At least one" is not to be construed as limiting "a" or "an." It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

It will be understood that, although the terms "first", "second" and "opposite" and the like may be used herein to describe various elements, these elements should not be limited by these terms. These terms are only used to distinguish one element from another element. Thus, "a first element" discussed below could be termed "a second element" without departing from the teachings herein.

"About", "approximately" or "substantially" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 20%, 10% or 5% of the stated value.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

Some examples are described herein with reference to cross section illustrations that are schematic illustrations of idealized examples, wherein like reference numerals refer to like elements throughout the specification. As such, variations from the shapes of the illustrations as a result, for example, of manufacturing techniques and/or tolerances, are to be expected. Thus, examples described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims. Some of the parts which are not associated with the description may not be provided in order to specifically describe exemplary examples of the present disclosure.

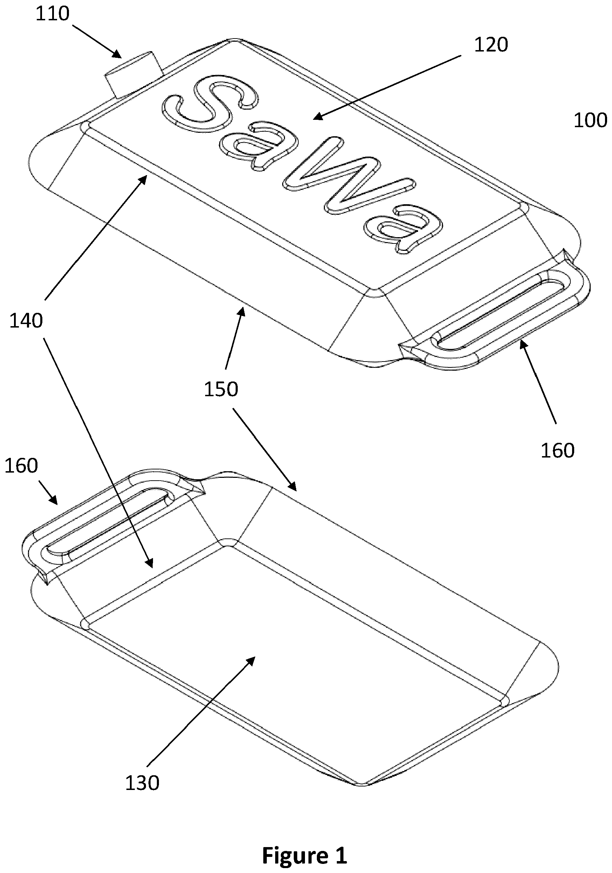

Figure 1-2 show an example embodiment of the present invention, in the form of a collapsible plastic container for solar water disinfection (100) having a stiffness to enable it to shift between a voluminous filled state and a collapsed empty state, said container having an opening (110) for receiving water to be disinfected where said opening (110) can subsequently be closed and reopened, said container having a handle (160) and two opposing surfaces (120, 130) being substantially flat and having bends (140) which are connected by a flexible welding (150) such that the plastic container is collapsible, and said container being made substantially of photostabilized LDPE plastic material being sufficiently stable to UV radiation to enable the container to have an outdoor in-use period corresponding to a Kly of at least 100 GJ/m².

The plastic container is substantially made of photostabilized LDPE comprising stabilizers to postpone the degradation of the material from exposure to sunlight.

The plastic container (100) has an opening (110) with a screw cap such that water can be filled into the container prior to disinfection and the disinfected water subsequently can be drained from the container during use. The container is also furnished with a handle (160) which enables handling of the collapsible plastic container, as well as hanging the container from a rope or a hook. Those features facilitates the handling of the collapsible plastic container during filling, transport, disinfection and subsequent use of the disinfected water.

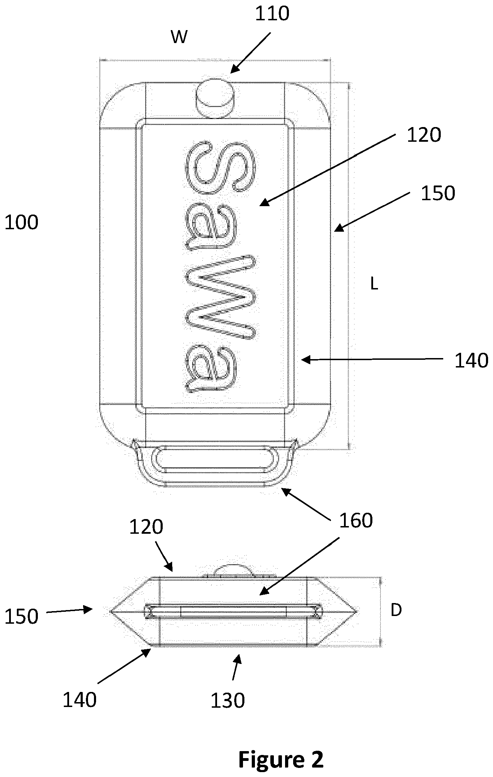

The collapsible plastic container has a box-like shape with Figure 2 indicating the length (L), width (W) and depth (D) of the container. This container is designed to be filled with water and placed on a surface in a way that the substantially flat surface (130) facing downwards. This allows exposure to sunlight on the surface (120) as well as the welding (150) and several of the sides of the container.

The term "collapsible" is intended to have its ordinary meaning, i.e. being able to be folded into a more compact shape, such as to significantly reduce the volume of the container.

The collapsible plastic container in a collapsed state is depicted in Figure 3 where the surface (120) is folded onto the center of the container thus approximately reducing the volume of the container by 50%. This folding is made possible by the flexible welding (150) and the bend (140).

### Reference numbers and letters

- 100: Container
- 110: Opening
- 120: Bottom surface
- 130: Upper surface
- 140: Bend
- 150: Flexible welding
- H: Height
- W: Width
- D: Depth

## Claims

1. A collapsible plastic container for solar water disinfection (100) having a stiffness to enable it to shift between a voluminous filled state and a collapsed empty state, said container having an opening (110) for receiving water to be disinfected where said opening (110) can subsequently be closed and reopened, said container having a handle (160) and two opposing surfaces (120, 130) being substantially flat and having bends (140) which are connected by a flexible welding (150) such that the plastic container is collapsible, and said container being made substantially of photostabilized LDPE plastic material being sufficiently stable to UV radiation to enable the container to have an outdoor in-use period corresponding to a Kly of at least 100 GJ/m².

2. The collapsible plastic container according to claim 2, wherein said photostabilized LDPE plastic material comprises at least one antioxidant.

3. The collapsible plastic container according to any one of the preceding claims, wherein said photostabilized LDPE plastic material comprises a hindered amine light stabilizer (HALS).

4. The collapsible plastic container according to any one of the preceding claims, having a box-like shape, e.g. having distinct substantially flat surfaces (120, 130) connected by bends (140) and a flexible welding (150), said bends (140) having a length of less than 15% of the length or width of any of said surfaces (120, 130).

5. The collapsible plastic container according to any of the preceding claims, having a length (L) larger than the width (W), and said width (W) larger than the depth (D), wherein the width (W) to depth (D) ratio is at least 1.5, such as at least 2.0, such as in the range from 1.5 to 3.0, such as in the range from 2.0 to 2.6.

6. The collapsible plastic container according to any of the preceding claims, having a length (L) larger than the width (W), and said width (W) larger than the depth (D), wherein the length (L) to width (W) ratio is in the range from 1.0 to 3.0, from 1.0 to 1.8, from 1.15 to 1.5, or from 1.2 to 1.4.

7. The collapsible plastic container according to claim 5 or 6, having a depth (D) in the range from about 5cm to about 15cm, in the range from about 7cm to about 12cm, or about 9cm.

8. The collapsible plastic container according to any of the preceding claims, wherein one surface (120) is clear to incident sunlight, and the opposite surface (130) has a dark colour thus absorbing IR.

9. The collapsible plastic container according to any of the preceding claims, wherein one surface (120) being LDPE without colour, the other surface (130) being LDPE with a dark colour such as black or blue.

10. The collapsible plastic container according to any one of the preceding claims, wherein said container has an average thickness of the LDPE plastic material in the range from about 0.5 mm to about 2.0 mm.

11. The collapsible plastic container according to any of the preceding claims, which is manufactured by welding together two sheets of LDPE.

12. The collapsible plastic container according to claim 11, wherein the two sheets of LDPE are vacuum formed.

13. The collapsible plastic container according to any of the preceding claims, wherein the opening (110) of the container is furnished with a screw cap, a tap or a dispenser.

14. Use of the collapsible plastic container as defined in any of the preceding claims for solar disinfection of water.

15. The use according to claim 14 wherein the collapsible plastic container is placed in the sunlight with the surface (130) towards the ground.
